# EUROPEAN PATENT SPECIFICATION

(11) **EP 2 333 270 B1**
(45) Date of publication and mention of the grant of the patent: **28.08.2013**
(21) Application number: 09425488.5
(22) Date of filing: 26.11.2009
(51) Int. Cl.: F02B 21/00, F02M 23/00, F02M 35/00

(54) **Added acceleration system for endothermic engine**
Zusätzliches Beschleunigungssystem für endothermen Motor
Système d'accélération ajoutée pour moteur endothermique

(43) Date of publication of application: 15.06.2011
(73) Proprietor: Iveco S.p.A., 10156 Torino (IT)
(72) Inventor: Stuerner, Johann, 89079 Ulm (DE); Prina, Claudio, 13900 Biella (IT); Bezze, Massimo, 10080 S. Benigno Canavese (IT)
(74) Representative: Borsano, Corrado

(56) References cited:
- DE-A1- 3 235 616
- DE-A1-102004 028 216
- DE-A1-102004 047 975
- DE-A1-102006 061 568
- FR-A1- 2 355 996

## Description

### Application field of the invention

The present invention relates to an added acceleration system for endothermic engine.

In particular, the invention is advantageously used for increasing the acceleration capacity of engines, preferably naturally-aspirated or turbocharged endothermic engines mounted, in non-limitative examples, on industrial vehicles for hauling goods, such as van and similar, or on automobiles, or on specialty vehicles, such as fire-fighting vehicles.

### Description of the prior art

In the field of the commercial or industrial hauling, of specialty vehicles and of automobiles, it is known the use of endothermic engines, preferably turbocharged, whose power should necessarily be very high in order to move the vehicles on which they are mounted, that are usually very large-sized and very heavy, above all in full load conditions.

In particular, it is very important that such engines can deliver their maximum power when the vehicles on which they are mounted need to travel on difficult routes, such as roads with steep slopes or particularly bumpy roads, both when starting or when overtaking.

At present, in order to allow an additional engine power increase, by realizing an additional acceleration or pickup, supplementary systems are known, which, in combination with the turbocharger of each engine, are suitable to sensibly increase the air intake by withdrawing the air from the braking system of the vehicles themselves, in a step preceding the activation of the turbocharger itself.

Since such supplementary systems require additional external tanks usually large-sized and capacious, a high-pressure air compressor, and also a pneumatic connection with high capacity and high exchange speed between additional tanks and engines, the mentioned supplementary systems known in the art imply a remarkable increase of the dimensions of the vehicles on which they are mounted, and also a considerable increase of production and commercialization costs of the vehicles themselves. DE 10 2004 047 975 A1 shows a further example of such systems.

A partial solution of such drawbacks is in DE102006061568 or in DE102004028216, whose features are in the preamble of the claim 1.

Moreover, since there is no high-pressure air compressor on the automobile engines, the systems known in the art can be applied only on the big engines of the industrial vehicles which are provided with air compressor for braking system.

### Summary of the invention

The aim of the present invention is therefore to overcome the drawbacks of the prior art described above.

In particular, an aim of the present invention is to realize a system applicable on endothermic engines, both of the naturally-aspired and of the turbocharged type, and suitable for guaranteeing an additional pickup acceleration to the vehicles/automobiles and to the engines themselves.

An additional aim of the present invention is to realize an added acceleration system suitable for operating by exploiting the normal compression strokes of the endothermic engine on which it is applied.

According to the present invention an added acceleration system for an endothermic engine is realized, comprising means for an additional air intake to at least one cylinder of the engine, the system being **characterized in that** the intake means comprise means for withdrawing the compressed air from means for containing compressed air, and intake means suitable for introducing said compressed air directly in an intake pipe of said cylinder before the fuel intake.

The subject of this invention is in particular an added acceleration system for an endothermic engine as well as an engine and a vehicle using said system, as described more fully in the claims, which are an integral part of this description.

### Brief description of the Figures

The technical details, according to the purposes mentioned above, and the advantages of the invention will become more clear from the following detailed description given with reference to the figures attached hereto in which a preferred but non-limitative embodiment of the system is shown, in which:
- figure 1 shows a schematic view, partially a section view and with some parts removed for the sake of clarity, of a preferred embodiment of the added acceleration system according to the present invention, applied on a turbocharged endothermic engine; and
- figure 2 shows a further schematic view of a detail of the system according to the invention.

### Detailed description of preferred embodiments of the invention

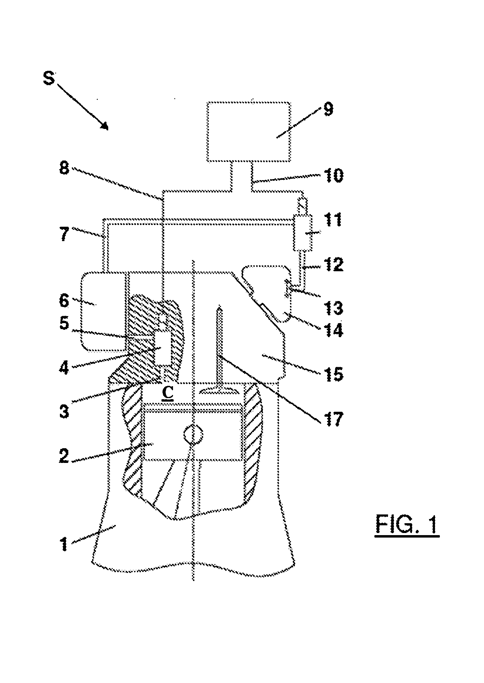

With reference to the attached figures, S generally indicates an added acceleration system of an endothermic engine 1, which in the following description, for the sake of clarity, is schematically described with only a single cylindrical compression and combustion chamber C, inside which a respective piston 2 is suitable to move according to a reciprocating motion, after the air intake, by means of the intake valve 17, and the fuel injection, and their subsequent compression which generates the known step of combustion. According to what is shown in figure 1, the system S comprises, in correspondence of the cylinder head 15 which defines the chamber C, a first solenoid valve 4, which is connected to the chamber C itself by means of a channel or of a pipe 3, and on the opposite side to a tank 6 suitable for containing compressed air, by means of a channel or of a pipe 5. The tank 6 is preferably directly connected to the head 15, or it is integrated in the casting of the cylinder 1 itself, therefore being part of the cylinder itself.

The mentioned solenoid valve 4 is driven by the electronic control unit, indicated by 9 in figure 1, by means of the electric connection 8.

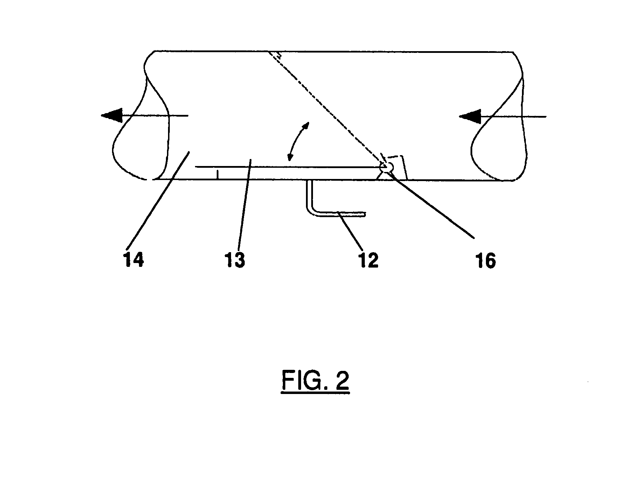

According to what is shown in figure 1 and in figure 2, the tank 6 containing compressed air is also connected to a further solenoid valve 11 by means of a pipe 7, such solenoid valve being in its turn connected to a further valve 13 by means of a channel 12.

The valve 13 mentioned above is suitable to open, and stay opened, by means of a spring 16 placed on its own fulcrum point, in order to allow the introduction of the compressed air from the tank 6 into the intake pipe 14, before the injection of the fuel in the chamber C.

In case of a naturally-aspired engine, it is preferable to add a further valve (not shown in the figure) in the intake pipe 14, in order to block the air flow in the opposite direction.

When an additional pickup phase is required to the engine 1 (for example when the vehicle or the automobile on which the engine 1 is mounted is travelling on a road with a steep slope), the compressed air contained in the tank 6 is introduced with a high pressure directly into the intake pipe 14 before the fuel injection into the chamber C.

As a direct consequence, it is possible to inject a considerable additional amount of fuel into the chamber C, generating a fast pickup of the engine RPM and therefore providing a optimal and fast pickup acceleration to the endothermic engine 1.

It is worth noting that in case a further increase of the air pressure in tank 6 is necessary, the mentioned solenoid valve 4 is opened so that the air withdrawn from the chamber C and compressed by the piston may circulate in the mentioned pipes 3 and 5 after the combustion phase, in order to reach the inside of the tank 6 itself. Thus the lack of air occurring at low RPM, in case of a turbocharged engine, is compensated. The invention thus contrived can be subjected to numerous variations or modification, without departing from the scope of the invention; moreover all the details may be replaced by others technically equivalent.

## Claims

1. Added acceleration system (S) for an endothermic engine (1), comprising intake means (4,7,11,12,13,16) for an additional air intake to at least one cylinder of said engine (1), the cylinder comprising an intake pipe (14) and a head (15) which defines a chamber (C), said intake means (4,7,11,12,13,16) comprising
- means (6) for containing compressed air,
- a first connection (3,4,5) between the cylinder and the containing means (6) in correspondence of the cylinder head (15), consisting of a solenoid valve (4), connected to the chamber (C) itself by means of a first channel (3), and on an opposite side to said containing means (6) by means of a channel (5), and suitable to allow the passage of the air from said cylinder of said engine (1) to said containing means (6)
**characterized in** comprising
- a second connection (7,11,12,13,16) between the cylinder and the containing means (6) for withdrawing said compressed air from the containing means (6) and for introducing said compressed air directly in said intake pipe (14) of said cylinder (C) before the fuel injection.

2. System according to claim 1, wherein said means (6) for containing compressed air are coupled or are integral part of said cylinder (C).

3. System according to claim 1, wherein said engine (1) is a turbocharged engine.

4. System according to claim 1, wherein said engine (1) is a naturally-aspired engine.

5. System according to any of the previous claim, wherein said second connection (7,11,12,13,16) comprise first valve means (11) suitable to allow the passage of the air coming from said containing means (6) and intake means (11) of said air from the containing means (6) to said valve means (11).

6. System according to any of the previous claims, wherein said second connection (12,13,16) comprise valve means (13) suitable to allow the introduction of said compressed air in said intake pipe (14).

7. System according to any of the previous claims, comprising management and control means (9) of the intake flow of said compressed air in said intake pipe (14) of said engine (1).

8. Vehicle for the commercial or industrial hauling, or specialty vehicle, or automobile, comprising the added acceleration system according to any of the previous claims.

9. Endothermic engine (1), comprising the added acceleration system (S) according to any of the claims from 1 to 7.

## Patentansprüche

1. Zusatzbeschleunigungssystem (S) für einen endothermen Motor (1), wobei das Zusatzbeschleunigungssystem Einlassmittel (4, 7, 11, 12, 13, 16) für einen Zusatzlufteinlass in wenigstens einen Zylinder des genannten Motors (1) umfasst, wobei der Zylinder ein Einlassrohr (14) und einen Kopf (15), der eine Kammer (C) definiert, umfasst, wobei die genannten Einlassmittel (4, 7, 11, 12, 13, 16) umfassen:
- Mittel (6) zum Aufnehmen von Druckluft,
- eine erste Verbindung (3, 4, 5) zwischen dem Zylinder und den Aufnahmemitteln (6) entsprechend dem Zylinderkopf (15), die aus einem Magnetventil (4) besteht, das mittels eines ersten Kanals (3) mit der Kammer (C) selbst und auf einer gegenüberliegenden Seitemittels eines Kanals (5) mit dengenannten Aufnahmemitteln (6) verbunden istund die geeignet ist, den Durchgang der Luft von dem genannten Zylinder des Motors (1) zu dengenannten Aufnahmemitteln (6) zu ermöglichen,
**dadurch gekennzeichnet, dass** das Zusatzbeschleunigungssystem umfasst:
- eine zweite Verbindung (7, 11, 12, 13, 16) zwischen dem Zylinder und den Aufnahmemitteln (6) zum Ansaugen dergenannten Druckluft aus den Aufnahmemitteln (6) und zum direkten Einleiten dergenannten Druckluft in das genannte Einlassrohr (14) des genannten Zylinders (C) vor der Kraftstoffeinspritzung.

2. System gemäß Anspruch 1, wobei die genannten Mittel (6)zum Aufnehmen von Druckluft mitdem genannten Zylinder (C) gekoppelt oder ein integraler Bestandteil von ihm sind.

3. System gemäß Anspruch 1, wobei dergenannte Motor (1) ein Motor mit Turbolader ist.

4. System gemäß Anspruch 1, wobei dergenannte Motor (1) ein Saugmotor ist.

5. System gemäß einem der vorhergehenden Ansprüche, wobei die genannte zweite Verbindung (7, 11, 12, 13, 16) erste Ventilmittel (11), die geeignet sind, den Durchgang der von dengenannten Aufnahmemitteln (6) kommenden Luft zu ermöglichen, und Einlassmittel (11) der genannten Luft von den Aufnahmemitteln (6) zu den genannten Ventilmitteln (11) umfasst.

6. System gemäß einem der vorhergehenden Ansprüche, wobei die genannte zweite Verbindung (12, 13, 16) Ventilmittel (13) umfasst, die geeignet sind, die Einleitung der genannten Druckluft in das genannte Einlassrohr (14) zu ermöglichen.

7. System gemäß einem der vorhergehenden Ansprüche, das Management-und Steuermittel (9) der Einlassströmung der genanntenDruckluft in das genannte Einlassrohr (14) des genanntenMotors (1) umfasst.

8. Fahrzeug für den kommerziellen oder gewerblichen Transport oder Spezialfahrzeug oder Kraftfahrzeug, das das Zusatzbeschleunigungssystem gemäß einem der vorhergehenden Ansprüche umfasst.

9. Endothermer Motor (1), der das Zusatzbeschleunigungssystem (S) gemäß einem der Ansprüche 1 bis 7 umfasst.

## Revendications

1. Système d'accélération ajouté (S) pour un moteur endothermique (1), comprenant des moyens d'admission (4, 7, 11, 12, 13, 16) pour une admission d'air additionnelle à au moins un cylindre dudit moteur (1), le cylindre comprenant un tuyau d'admission (14) et une tête (15) qui définit une chambre (C), lesdits moyens d'admission (4, 7, 11, 12, 13, 16) comprenant
- un moyen (6) pour contenir de l'air comprimé,
- une première connexion (3, 4, 5) entre le cylindre et le moyen de contenant (6) en correspondance de la tête de cylindre (15), constituée d'une vanne à solénoïde (4), connectée à la chambre (C) elle-même au moyen d'un premier canal (3), et sur un côté opposé audit moyen de contenant (6) au moyen d'un canal (5), et apte à permettre le passage de l'air dudit cylindre dudit moteur (1) audit moyen de contenant (6),
caractérisé en comprenant
- une deuxième connexion (7, 11, 12, 13, 16) entre le cylindre et le moyen de contenant (6) pour le retrait dudit air comprimé du moyen de contenant (6) et pour introduire ledit air comprimé directement dans ledit tuyau d'admission (14) dudit cylindre (C) avant l'injection du combustible.

2. Système selon la revendication 1, dans lequel lesdits moyens (6) pour contenir de l'air comprimé sont couplés à ou sont une partie intégrale dudit cylindre (C).

3. Système selon la revendication 1, dans lequel ledit moteur (1) est un moteur turbocompressé.

4. Système selon la revendication 1, dans lequel ledit moteur (1) est un moteur à aspiration naturelle.

5. Système selon l'une quelconque des revendications précédentes, dans lequel ladite deuxième connexion (7, 11, 12, 13, 16) comprend des premiers moyens de vanne (11) aptes à permettre le passage de l'air arrivant desdits moyens de contenant (6) et des moyens d'admission (11) dudit air des moyens de contenant (6) auxdits moyens de vanne (11).

6. Système selon l'une quelconque des revendications précédentes, dans lequel ladite deuxième connexion (12, 13, 16) comprend des moyens de vanne (13) aptes à permettre l'introduction dudit air comprimé dans ledit tuyau d'admission (14).

7. Système selon l'une quelconque des revendications précédentes, comprenant des moyens de gestion et de commande (9) de l'écoulement d'admission dudit air comprimé dans ledit tuyau d'admission (14) dudit moteur (1).

8. Véhicule pour le convoyage commercial ou industriel, ou véhicule spécialisé, ou automobile, comprenant le système d'accélération ajouté selon l'une quelconque des revendications précédentes.

9. Moteur endothermique (1), comprenant le système d'accélération ajouté (S) selon l'une quelconque des revendications 1 à 7.
